# EUROPÄISCHE PATENTSCHRIFT

(11) **EP 1 858 686 B1**
(45) Veröffentlichungstag und Bekanntmachung des Hinweises auf die Patenterteilung: **03.10.2012**
(21) Anmeldenummer: 06722555.7
(22) Anmeldetag: 06.03.2006
(51) Int. Cl.: B29C 45/16

(54) **VERFAHREN ZUM HERSTELLEN EINES ZWEI KOMPONENTEN AUFWEISENDEN KUNSTSTOFFKAROSSERIETEILS FÜR EIN FAHRZEUG**
METHOD FOR PRODUCING A PLASTIC BODY PART COMPRISING TWO COMPONENTS FOR A VEHICLE
PROCEDE POUR PRODUIRE UNE PARTIE PLASTIQUE DE CARROSSERIE COMPRENANT DEUX COMPOSANTS POUR UN VEHICULE

(30) Priorität: 08.03.2005 DE 102005010624
(43) Veröffentlichungstag der Anmeldung: 28.11.2007
(73) Patentinhaber: Webasto AG, 82131 Stockdorf (DE)
(72) Erfinder: SCHWAIGHOFER, Ralf, 83115 Neubeuern (DE); LANG, Andreas, 82194 Gröbenzell (DE)
(74) Vertreter: advotec.
(86) Internationale Anmeldenummer: PCT/DE2006/000389
(87) Internationale Veröffentlichungsnummer: WO 2006/094484

(56) Entgegenhaltungen:
- DE-A1- 10 237 322
- JP-A- 1 247 124
- US-A- 4 874 654
- US-A1- 2004 201 132
- US-B1- 6 244 653
- US-B1- 6 461 704

## Beschreibung

Die vorliegende Erfindung betrifft ein Verfahren zum Herstellen eines flächigen, zwei Komponenten aufweisenden Kunststoffkarosserieteils für ein Fahrzeug gemäß dem Oberbegriff von Anspruch 1.

Ein Beispiel für eine Zweikomponentenkunststoffscheibe ist in der DE 20 2004 003 468 U1 beschrieben, wo eine transparente Spritzgusskunststoffscheibe im Bereich von Angussstellen, die sich an einer optischen Oberfläche befinden, mit einer zweiten, schwarz eingefärbten Kunststoffkomponente versehen wird, um die Angussstellen zu kaschieren. Die Scheibe wird dabei mit einem Zweikomponentenspritzgussverfahren mit einem Wendeplattenwerkzeug hergestellt, wobei die Begrenzung des seitlichen Vordringens der zweiten Komponente dadurch erzielt wird, dass ein Spritzgusswerkzeugteil auf die ebene Oberfläche der ersten Komponente dichtend angedrückt wird. Die Kante des Rands der zweiten Komponente steht dabei direkt auf der ebenen Oberfläche der ersten Komponente.

Nachteilig dabei ist, dass beim Anspritzen der zweiten Komponente die zweite Komponente den rechtwinklig ausgebildeten Rand der für die zweite Komponente im Werkzeug gebildeten Kavität zumindest beim ersten Anfluten nicht vollständig erreicht und ausfüllt. Durch den anschließenden Nachdruckschritt kann zwar eine bessere Ausfüllung dieses Eckbereichs erzielt werden, jedoch reicht die thermische Energie der dann bereits teilweise abgekühlten Schmelze unter Umständen nicht mehr dazu aus, eine ausreichende Verbindung zur ersten Komponente, die durch reines Anschmelzen erzielt wird, herzustellen, so dass in diesen Bereichen Kapillaren und Kerben entstehen können. In die Kapillaren kann im nachfolgenden Beschichtungsprozess Primer-Material gezogen werden, welches zu Spannungsrissbildung führen kann. Ferner kann es in den Kapillaren zu Lackansammlungen kommen, die optisch störend wirken können und gegebenenfalls zu Delamination führen können. Kerben können bei Belastung dazu führen, dass ein spröder Bruch auftritt.

weitere Verfahren zum Herstellen von flachigen kunst-stoff teilen sind beispielsweise auch aus der US-A-4874 654 US-A-6244 653, US-A-6 461 704, DE-A-102 37 322, US-A-2004/0201132 und JP-A-01 247 124 bekannt.

Es ist Aufgabe der vorliegenden Erfindung, ein Verfahren zum Herstellen eines Zweikomponentenkunststoffkarosserieteils für ein Fahrzeug zu schaffen, bei welchem eine möglichst gute Anbindung der zweiten Komponente an die erste Komponente erzielt wird.

Diese Aufgabe wird erfindungsgemäß gelöst durch ein Verfahren gemäß Anspruch 1. Dabei ist vorteilhaft, dass dadurch, dass der Steg so geformt wird, dass die zweite Flanke des Stegs zum Scheitel des Stegs hin konkav ansteigt, eine möglichst genaue Nachbildung der Form der Front der zur zweiten Flanke vordringenden zweiten Komponente erzielt werden kann, wodurch eine vollflächige Anlage der zweiten Komponente an der zweiten Seite des Stegs und damit an der ersten Komponente ermöglicht wird, indem insbesondere scharfkantige Eckbereiche der zweiten Kavität vermieden werden, in welche die zweite Komponente ohne großen Druck nicht vordringen kann.

Bevorzugte Ausgestaltungen der Erfindung ergeben sich aus den Unteransprüchen.

Im folgenden wird die Erfindung anhand der beigefügten Zeichnungen beispielhaft näher erläutert. Dabei zeigen:
- Fig. 1: eine schematische Schnittdarstellung der Front einer in einer Kavität fließenden Schmelze; und
- Fig. 2: eine Querschnittansicht eines erfindungsgemäßen Karosserieteils während des Anspritzens der zweiten Komponente im Randbereich der zweiten Komponente.

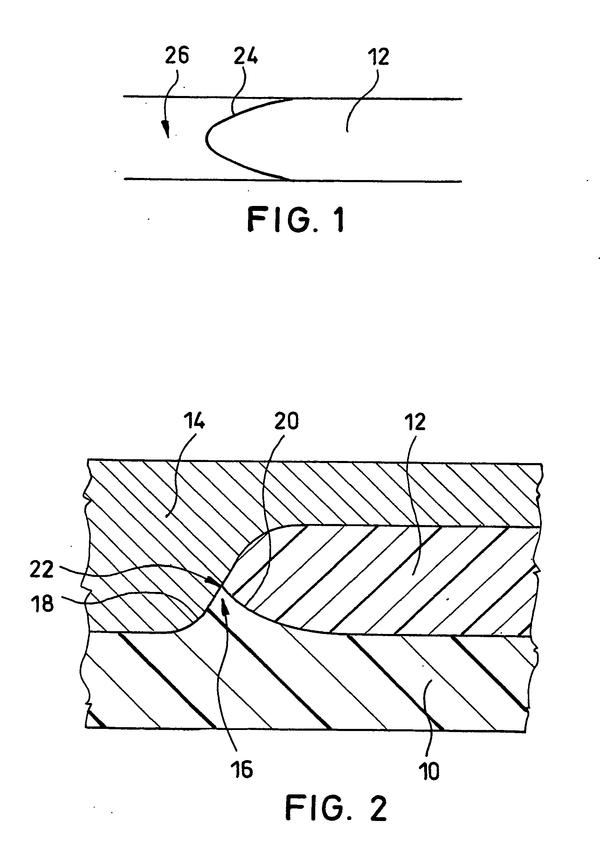

In Fig. 2 ist schematisch gezeigt, wie eine von einer ersten Kunststoffspritzguss-Komponente gebildete Basisstruktur 10 mit einer zweiten Kunststoffkomponente 12 hinterspritzt werden kann. Die erste Komponente 10 ist flächig ausgebildet und kann beispielsweise als Ersatz für eine Glasverscheibung in einem Kraftfahrzeug dienen. Vorzugsweise handelt es sich bei der ersten Komponente 10 um transparentes Polycarbonat (PC).

Dabei wird zunächst die Basisstruktur in einer ersten Kavität eines Spritzgußwerkzeugs geformt. In einem zweiten Spritzgußschritt wird dann die von der ersten Komponente gebildete Basisstruktur 10 auf einer ihrer beiden Seiten über einen Teil ihrer Fläche mit der zweiten Komponente 12 hinterspritzt. Die zweite Komponente 12 ist vorzugsweise weniger transparent als die erste Komponente und kann als eingefärbtes PC oder als eingefärbte PC-Mischung ausgebildet sein. Vorzugsweise ist die zweite Komponente 12 schwarz eingefärbt. Vorzugsweise ist die zweite Komponente 12 im Randbereich der ersten Komponente 10 vorgesehen, um einen schwarzen Rand zu bilden, der dazu dienen kann, um zusätzliche Funktionen, wie z.B. Dome, Rippen, Abstandshalter, etc., zu integrieren, und zum anderen dazu dienen kann, den Bereich der ersten Komponente 10 nach oben zu verdecken, in welchem diese mit dem Fahrzeug verklebt wird. Solche zweikomponentigen Kunststoffspritzgussteile als Ersatz für Glasverscheibungen im Kraftfahrzeug werden auch als "Glazing"-Bauteile bezeichnet.

Um die Basistruktur 10 mit der zweiten Komponente 12 zu hinterspritzen, wird im Werkzeug eine zweite Kavität ausgebildet. Vorzugsweise handelt es sich dabei um ein Wendeplattenwerkzeug, wobei nach dem Formen der Basisstruktur 10 ein Teil des Werkzeugs zusammen mit der noch auf dem Werkzeugteil liegenden Basisstruktur 10 verstellt wird, um die zweite Kavität zu erzeugen. Beim Wendeplattenwerkzeug handelt es sich bei dieser Verstellbewegung um eine Schwenkbewegung.

In Fig. 2 ist schematisch ein Werkzeugteil 14 gezeigt, welches zusammen mit der mit der zweiten Komponente 12 zu hinterspritzenden Seite der Basisstruktur 10 die zweite Kavität bildet, indem sich das Werkzeugteil 14 auf diese Seite der Basistruktur 10 dichtend auflegt, um die zweite Komponente 12 am seitlichen Vordringen über den zur Hinterspritzung vorgesehenen Bereich hinaus hindert. Grundsätzlich könnte die zweite Kavität auch erzeugt werden, indem statt des die Basisstruktur 10 tragenden Werkzeugteils nach dem Formen der Basisstruktur 10 das Oberwerkzeug durch eine entsprechende Verstellbewegung ausgetauscht wird, um das für die Ausbildung der zweiten Kavität erforderliche Werkzeugteil 14 an die richtige Stelle zu bringen.

Um eine gute Abdichtung der zweiten Kavität an ihrem seitlichen (d.h. in Fig.2 linken) Rand zu erzielen, ist die der zweiten Komponente 12 zugewandte Oberfläche der ersten Komponente 10 mit einem Steg 16 versehen, der bezüglich der Oberfläche der ersten Komponente 10 erhaben ist und eine erste Flanke 18, eine zweite Flanke 20 und einen die beiden Flanken 18, 20 trennenden Scheitel 22 aufweist. Das Werkzeugteil 14 legt sich dabei an die erste Flanke 18 dichtend an, während beim Füllen der zweiten Kavität die schmelzflüssige zweite Komponente 12 zu der zweiten Flanke 20 hinströmt und sich schließlich an diese anlegt, wobei das Werkzeugteil 14 dazu dient, die schmelzflüssige zweite Komponente 12 am Vordringen über den Scheitel 22 hinaus zu hindern. Die zweite Flanke steigt konkav zum Scheitel 22 hin an, wobei die Form hinsichtlich Steigung und Krümmungsradius so gewählt ist, dass sie im wesentlichen der Form der Front der zur Seitenflanke 20 vordringenden schmelzflüssigen zweiten Komponente 12 entspricht, um eine vollflächige Anlage der zweiten Komponente 12 an der zweiten Flanke 20 zu bewirken.

In Fig. 1 ist schematisch gezeigt, welche Form die Front 24 einer in einer Kavität 26 vordringenden Schmelze 12 aufgrund der Oberflächenspannung annimmt.

Insbesondere können auf diese Weise scharfkantige Bereiche der zweiten Kavität vermieden werden, welche sich nur unzureichend mit der schmelzflüssigen zweiten Komponente 12 füllen würden.

Vorzugsweise ist auch das Werkzeugteil 14 in dem Bereich oberhalb der zweiten Flanke 20 entsprechend konkav gekrümmt, um eine vollflächige Anlage der zweiten Komponente 12 in diesem Bereich des Werkzeugteils 14 zu bewirken.

### Bezugszeichenliste

- 10: erste Komponente
- 12: zweite Komponente
- 14: Werkzeugteil
- 16: Steg
- 18: erste Flanke
- 20: zweite Flanke
- 22: Scheitel
- 24: Front
- 26: Kavität

## Patentansprüche

1. Verfahren zum Herstellen eines flächigen, zwei Komponenten aufweisenden Kunststoff-Karosserieteils für ein Fahrzeug, wobei in einem Spritzgusswerkzeug eine erste Kavität erzeugt wird, die erste Kavität mit einer ersten Komponente gefüllt wird, um eine geformte Basisstruktur (10) zu bilden, in dem Werkzeug auf einer der beiden Seiten der Basisstruktur (10) eine zweite Kavität erzeugt wird, die zweite Kavität mit einer zweiten Komponente (12) gefüllt wird, um die Basisstruktur (10) in einem Teilbereich mit der zweiten Komponente (12) hinterspritzen, und die hinterspritzte Basisstruktur aus dem Werkzeug entnommen wird, **dadurch gekennzeichnet, dass** beim Bilden der Basisstruktur (10) auf der mit der zweiten Komponente (12) zu hinterspritzenden Seite der Basisstruktur (10) mindestens ein bezüglich der Oberfläche erhabener Steg (16) mit einer ersten (18) und einer zweiten Flanke (20) und einem die beiden Flanken (18, 20) trennenden Scheitel (22) ausgebildet wird, wobei beim Hinterspritzen mit der zweiten Komponente (12) der Steg (16) auf seiner ersten Flanke (18) mit dem Werkzeug (14) dichtend zusammenwirkt, um die zweite Komponente (12) am seitlichen Vordringen über den Scheitel (22) des Stegs (16) zu hindern, wobei sich die zweite Komponente (12) an die zweite Flanke (20) des Stegs (16) anlegt, wobei beim Bilden der Basisstruktur (10) der Steg (16) so geformt wird, dass die zweite Flanke (20) des Stegs (16) zum Scheitel (22) des Stegs (16) hin konkav ansteigt, so dass eine möglichst genaue Nachbildung der Form der Front der zur zweiten Flanke (20) vordringenden zweiten Komponente (12) erzielt werden kann, um eine vollflächige Anlage der zweiten Komponente (12) an der zweiten Flanke (20) des Stegs (16) zu bewirken.

2. Verfahren nach Anspruch 1, **dadurch gekennzeichnet, dass** die zweite Komponente (12) weniger transparent als die erste Komponente ist.

3. Verfahren nach Anspruch 1 oder 2, **dadurch gekennzeichnet, dass** es sich bei der ersten Komponente um transparentes Polycarbonat handelt.

4. Verfahren nach einem der vorhergehenden Ansprüche, **dadurch gekennzeichnet, dass** es sich bei der zweiten Komponente (12) um eingefärbtes Polycarbonat oder eine eingefärbte Polycarbonat-Mischung handelt.

5. Verfahren nach Anspruch 4, **dadurch gekennzeichnet, dass** die zweite Komponente (12) schwarz eingefärbt ist.

6. Verfahren nach einem der vorhergehenden Ansprüche, **dadurch gekennzeichnet, dass** es sich bei dem Kunststoff-Karosserieteil um eine Scheibe handelt.

7. Verfahren nach einem der vorhergehenden Ansprüche, **dadurch gekennzeichnet, dass** es sich bei dem Werkzeug um ein Wendeplatten-Werkzeug handelt, wobei die Basisstruktur (10) zur Erzeugung der zweiten Kavität bewegt wird.

8. Verfahren nach einem der vorhergehenden Ansprüche, **dadurch gekennzeichnet, dass** die zweite Kavität durch Anlegen eines Werkzeugsteils (14) aus Metall, insbesondere Stahl, an der ersten Flanke (18) des Stegs (16) erzeugt wird.

9. Verfahren nach Anspruch 8, **dadurch gekennzeichnet, dass** das Werkzeugteil (14), welches an die erste Flanke (18) des Stegs (16) angelegt wird, im Bereich oberhalb der zweiten Flanke (20) des Stegs (16) konkav gekrümmt ist.

## Claims

1. Method for producing a flat plastic body part which has two components for a vehicle, a first cavity being produced in an injection mould, the first cavity being filled with a first component, in order to form a shaped base structure (10), a second cavity being produced in the mould on one of the two sides of the base structure (10), the second cavity being filled with a second component (12), in order to overmould the base structure (10) in a part region with the second component (12), and the overmoulded base structure being removed from the mould, **characterized in that**, during the formation of the base structure (10), at least one web (16) is formed which is elevated with regard to the surface being formed with a first (18) and a second flank (20) and a peak (22) which separates the two flanks (18, 20) on that side of the base structure (10) which is to be overmoulded with the second component (12), the web (16) on its first flank (18) interacting sealingly with the mould (14) during overmoulding with the second component (12), in order to prevent the second component (12) from penetrating laterally beyond the peak (22) of the web (16), the second component (12) bearing against the second flank (20) of the web (16), the web (16) being shaped in such a way during the formation of the base structure (10) that the second flank (20) of the web (16) rises concavely towards the peak (22) of the web (16), so that as accurate as possible a reproduction of the shape of the front of the second component (12) which penetrates as far as the second flank (20) can be achieved, in order to bring about contact over the full surface area of the second component (12) with the second flank (20) of the web (16).

2. Method according to Claim 1, **characterized in that** the second component (12) is less transparent than the first component.

3. Method according to Claim 1 or 2, **characterized in that** the first component is transparent polycarbonate.

4. Method according to one of the preceding claims, **characterized in that** the second component (12) is dyed polycarbonate or a dyed polycarbonate mixture.

5. Method according to Claim 4, **characterized in that** the second component (12) is dyed black.

6. Method according to one of the preceding claims, **characterized in that** the plastic body part is a pane.

7. Method according to one of the preceding claims, **characterized in that** the mould is a turnover-plate mould, the base structure (10) being moved in order to produce the second cavity.

8. Method according to one of the preceding claims, **characterized in that** the second cavity is produced by placing a mould part (14) made from metal, in particular steel, against the first flank (18) of the web (16).

9. Method according to Claim 8, **characterized in that** the mould part (14) which is placed against the first flank (18) of the web (16) is curved concavely in the region above the second flank (20) of the web (16).

## Revendications

1. Procédé de fabrication d'une partie de carrosserie plate en plastique présentant deux composants, pour un véhicule, dans lequel, dans un outil de moulage par injection, une première cavité est produite, la première cavité est remplie d'un premier composant pour former une structure de base moulée (10), une deuxième cavité est produite dans l'outil sur l'un des deux côtés de la structure de base (10), la deuxième cavité est remplie d'un deuxième composant (12) pour surmouler par injection la structure de base (10) dans une région partielle avec le deuxième composant (12), et la structure de base surmoulée est enlevée de l'outil, **caractérisé en ce que** lors de la formation de la structure de base (10) sur le côté de la structure de base (10) à surmouler avec le deuxième composant (12), au moins une membrure (16) rehaussée par rapport à la surface est réalisée avec un premier (18) et un deuxième flanc (20) et avec un sommet (22) séparant les deux flancs (18, 20), dans lequel, lors du surmoulage avec le deuxième composant (12), la membrure (16) coopère de manière hermétique avec l'outil (14) sur son premier flanc (18), afin d'empêcher que le deuxième composant (12) ne fasse saillie latéralement au-delà du sommet (22) de la membrure (16), le deuxième composant (12) s'appliquant contre le deuxième flanc (20) de la membrure (16), dans lequel lors de la formation de la structure de base (10), la membrure (16) est formée de telle sorte que le deuxième flanc (20) de la membrure (16) monte de manière concave vers le sommet (22) de la membrure (16) de sorte qu'une reproduction aussi précise que possible de la forme de l'avant du deuxième composant (12) faisant saillie vers l'avant par rapport au deuxième flanc (20) puisse être obtenue afin de réaliser une application sur une surface complète du deuxième composant (12) contre le deuxième flanc (20) de la membrure (16).

2. Procédé selon la revendication 1, **caractérisé en ce que** le deuxième composant (12) est moins transparent que le premier composant.

3. Procédé selon la revendication 1 ou 2, **caractérisé en ce que** le premier composant est un polycarbonate transparent.

4. Procédé selon l'une quelconque des revendications précédentes, **caractérisé en ce que** le deuxième composant (12) est un polycarbonate coloré ou un mélange de polycarbonate coloré.

5. Procédé selon la revendication 4, **caractérisé en ce que** le deuxième composant (12) est coloré en noir.

6. Procédé selon l'une quelconque des revendications précédentes, **caractérisé en ce que** la partie de carrosserie en plastique est une vitre.

7. Procédé selon l'une quelconque des revendications précédentes, **caractérisé en ce que** l'outil est un outil à plaque réversible, la structure de base (10) étant déplacée pour obtenir la deuxième cavité.

8. Procédé selon l'une quelconque des revendications précédentes, **caractérisé en ce que** la deuxième cavité est produite en appliquant une partie d'outil (14) en métal, notamment en acier, contre le premier flanc (18) de la membrure (16).

9. Procédé selon la revendication 8, **caractérisé en ce que** la partie d'outil (14) qui est appliquée contre le premier flanc (18) de la membrure (16) est courbée sous forme concave dans la région au-dessus du deuxième flanc (20) de la membrure (16).
